Europäisches Patentamt

European Patent Office

Office européen des brevets

(11) Veröffentlichungsnummer: **0 503 449 A1**

## EUROPÄISCHE PATENTANMELDUNG

(21) Anmeldenummer: **92103657.0**

(22) Anmeldetag: **04.03.92**

(51) Int. Cl.5: **B01D 46/24**, B01D 46/26

(30) Priorität: **09.03.91 DE 4107642**

(43) Veröffentlichungstag der Anmeldung:
**16.09.92 Patentblatt 92/38**

(84) Benannte Vertragsstaaten:
**AT CH DE ES FR GB IT LI NL SE**

(71) Anmelder: **ESTA Apparatebau GmbH & Co. KG**
**Gotenstrasse 2-4**

**W-7913 Senden-Ay(DE)**

(72) Erfinder: **BUCHELE, Herbert**
**Bahnhofstrasse 24**
**W-7913, Senden-Ay(DE)**

(74) Vertreter: **Patentanwälte RUFF, BEIER und SCHÖNDORF**
**Neckarstrasse 50**
**W-7000 Stuttgart 1(DE)**

(54) **Filtervorrichtung.**

(57) Eine Filtervorrichtung (1) weist für das Arbeitsfilter (3) eine Reinigungsvorrichtung (21) auf, mit welcher während des Filterbetriebes über einen Förderkopf (22) mit Saugöffnung (24) fortlaufend eine relativ kleine Reinigungszone des Arbeitsfilters (3) abgesaugt und die dabei anfallenden Stoffe in einem gesonderten Reinigungsfilter (38) abgeschieden werden können. Das Arbeitsfilter (3) ist zweckmäßig durch eine mantelförmige Filterpatrone (15) mit einem zick-zack-förmig gefalteten Feinstfilter (65) aus Papier gebildet, auf dessen Außenumfang eine druckelastische Auflage (64) aufgelegt ist, welche wiederum von einem Filtertuch (67) umgeben ist, das beim Reinigung geringfügig in die Saugöffnung (24) angesaugt werden kann. Dadurch wird eine sehr hohe Standzeit des Arbeitsfilters (3) und ein im wesentlichen ununterbrochener Betrieb der Filtervorrichtung (1) ermöglicht.

Fig.1

Die Erfindung betrifft eine Filtervorrichtung, die insbesondere zum Aus- bzw. Abscheiden eines oder mehrerer Stoffe aus einem oder mehreren Fluids geeignet sein soll, wobei als Fluid statt Flüssigkeiten bevorzugt Gase bzw. Luft und als Stoffe statt Gas und/oder flüssigen Stoffen vor allem Feststoffpartikel in Betracht kommen. Derartige Filtervorrichtungen können z. B. zum Absaugen von Staub bzw. Rauch, z. B. Schleifstäuben, Schweißrauch bzw. an Brennschneidemaschinen, Laser-Schneidgeräten, Lötarbeitsstationen oder dgl. eingesetzt werden.

Bei solchen Filtervorrichtungen kann problematisch sein, daß häufig recht große Stoffmengen abzuscheiden sind, was in unmittelbarer Abhängigkeit von der Größe der zur Verfügung stehenden Filterfläche des Arbeitsfilters zu einem mehr oder weniger schnellen Zusetzen führt. Ein großes Arbeitsfilter führt zu einer entsprechenden Gerätegröße, und Arbeitsfilter beliebiger Größe führen mit zunehmendem Zusetzen zu einem schlechteren Nutzungsergebnis und Wirkungsgrad, wobei auch die Gefahr besteht, daß im Arbeitsfilter zunächst zurückgehaltene Stoffe doch noch durch das Arbeitsfilter auf dessen Reinfluidseite durchgerissen werden.

Das Arbeitsfilter kann zwar durch Rütteln, Klopfen, Abbürsten oder dgl. von oberflächig haftenden Stoffen ab und zu gereinigt werden, jedoch fallen diese dann in den Rohfluidraum des Arbeitsfilters, so daß sie durch die Strömungsverhältnisse wieder zurück zum Arbeitsfilter gelangen können, und außerdem können dadurch tiefer in das Arbeitsfilter eingedrungene Stoffe kaum wirksam entfernt werden.

Der Erfindung liegt auch die Aufgabe zugrunde, eine Filtervorrichtung der genannten Art zu schaffen, bei welcher Nachteile bekannter Lösungen vermieden sind und die insbesondere auf ausreichend einfache Weise eine wirksame Regenerierung des Arbeitsfilters, vorzugsweise im wesentlichen während dessen Filtrierarbeit, ermöglicht.

Zur Lösung dieser Aufgabe sind Mittel vorgesehen, um einen oder mehrere Arbeitsfilter mit einem oder mehreren Fluidströmen im wesentlichen im Arbeitszustand, also in der für die Filtrierarbeit vorgesehenen Einbaulage des Arbeitsfilters, zu reinigen. Bevorzugt erfolgt diese Reinigung jeweils nur in einem Teilbereich des Arbeitsfilters, während ein weiterer Teilbereich zur Durchführung der Filtrierarbeit zur Verfügung steht oder sogar von dem zu filternden Fluidstrom durchströmt wird. Die Reinigung kann dabei nach und nach fortlaufend stufenweise und/oder kontinuierlich über alle Teilbereiche des Arbeitsfilters fortlaufen, wobei zweckmäßig benachbarte Teilbereiche aneinander anschließend und/oder mehrere bis alle Teilbereiche während eines Reinigungszyklus wiederholt der Reinigungsarbeit ausgesetzt werden. Die Reinigungszone, die wesentlich kleiner als die gesamte wirksame Filterfläche, nämlich kleiner als ein Zehntel, ein Hundertstel oder sogar ein Tausendstel dieser Filterfläche sein kann, kann sich im wesentlichen vollständig zwischen zwei voneinander abgekehrten Begrenzungskanten der Filterfläche erstrecken, so daß für die Vorschubbewegung der Reinigungszone keine Bewegungen in zwei zueinander quer liegenden Richtungen, sondern nur eine Bewegung in einer einzigen Richtung erforderlich ist.

Anstatt von dem Arbeitsfilter den Stoff zunächst nur durch mechanische Arbeit, z. B. Schaben, zu entfernen, dann aufzufangen und als Fluidstrom aus dem Bereich des Arbeitsfilters bzw. des zugehörigen Filterraumes zu fördern, ist es zweckmäßig, das Arbeitsfilter für diesen Zweck unmittelbar mit einem Fluidstrom eines Reinigungsfluids zu beaufschlagen, das zweckmäßig den gleichen Aggregatzustand wie das zu reinigende Fluid hat und vorzugsweise gasförmig bzw. Luft ist. Dieses Reinigungsfluid wird nur in einer oder mehreren Reinigungszonen vorteilhaft im Gegenstrom zu dem zu reinigenden Fluid durch das Arbeitsfilter hindurchgeführt, wobei es zweckmäßig nicht als Druckfluid aus einer Förderöffnung gegen das Arbeitsfilter austritt, sondern als Saugfluid von der zu reinigenden Filterfläche her in die Förderöffnung angesaugt wird. Das Reinigungsfluid ist insofern zweckmäßig durch das gefilterte Reinfluid gebildet, das zu einem Teil an der Reinfluidseite des Arbeitsfilters umgelenkt und in entgegengesetzter Richtung wieder durch das Arbeitsfilter zurückgeführt wird und dabei aus dem Arbeitsfilter abgelagerte Stoffe herausreißt und in die Förderöffnung mitnimmt.

Die Fördermenge des Reinigungsfluids je Zeiteinheit kann z. B. zwischen zwei- und sechsfach, insbesondere etwa vierfach, kleiner als diejenige des zu reinigenden Fluids sein, während jedoch zweckmäßig der Förderdruck des Reinigungsfluids gegenüber demjenigen des zu reinigenden Fluids wesentlich, nämlich fünf- bis fünfundzwanzigfach, insbesondere etwa fünfzehnfach, höher ist. Bei einer Förderleistung des zu reinigenden Fluids von z. B. 1500m$^3$/h beträgt die Förderleistung des Reinigungsfluids etwa 400m$^3$/h, während der Förderdruck des zu reinigenden Fluids 130 bis 150mm WS und derjenige des Reinigungsfluids 2100mm WS beträgt; die Strömungsgeschwindigkeit des Reinigungsfluids beträgt dann zweckmäßig etwa 25m/s.

Erfolgt die Reinigung des Arbeitsfilters in dessen Arbeits- bzw. Einbaulage, so bedarf es hierfür keiner gesonderten Reinigungsstation. Erfolgt außerdem die Reinigung während des Filterbetriebes des Arbeitsfilters, so braucht dieser Filterbetrieb hierfür weder hinsichtlich des Durchsatzes des zu reinigenden Fluids reduziert, noch ganz unterbrochen zu werden, sei es kurzzeitig oder intermittierend. Vielmehr kann der Filtrierprozeß ununterbrochen und kontinuierlich während der Reinigungsarbeit durchgeführt werden, obwohl diese auch jederzeit bis in eine Unterbrechung des Filtrierprozesses fortgesetzt bzw. während einer solchen Unterbrechung durchgeführt werden kann.

Da die Reinigungsarbeit in einem geschlossenen Gehäuseraum, insbesondere in dem das Arbeitsfilter während des Filtrierprozesses aufnehmenden Filterraum, erfolgt, ist keinerlei Schmutzbelastung umgebender Räume zu befürchten. Ferner bedarf es in diesem geschlossenen Raum neben dem Arbeitsfilter keines gesonderten Sammelbereiches für die entfernten Stoffe, sondern diese können in einen weiteren Gehäuseraum gefördert und dort z. B. in einem oder mehreren gesonderten Reinigungsfiltern, Abscheideräumen oder dgl. gesammelt werden. Das dort dann gereinigte Reinigungsfluid kann zur Verbesserung des Wirkungsgrades bzw. für andere Zwecke, wie Kühlung, Reinigung oder dgl., im Kreislauf in den geschlossenen Raum bzw. zum Arbeitsfilter zurückgeführt werden, so daß es mit dem zu reinigenden Fluid vermischt und mit diesem wieder durch das Arbeitsfilter zu dessen Reinfluidseite hindurchgeführt wird.

Eine besonders wirksame und gleichmäßige Reinigung des Arbeitsfilters läßt sich erreichen, wenn die Vorschubbewegung der Reinigungszone anstatt manuell motorisch angetrieben ist, wobei die Bewegung vom Arbeitsfilter und/oder von einem oder mehreren Reinigungsköpfen ausgeführt werden kann. In jedem Fall ist zweckmäßig mindestens eine Lagerung unmittelbar zwischen dem Arbeitsfilter und dem Reinigungskopf vorgesehen, so daß diese Teile genau gegeneinander ausgerichtet sind. Ein oder mehrere Antriebe aus Motor bzw. Getriebe können dabei teilweise oder ganz gegenüber dem Rohfluidraum verkapselt, z. B. im Reinfluidraum an der Ausgangsseite des Arbeitsfilters angeordnet sein und/oder während des Betriebes zur REinigung mit dem gereinigten Reinigungsfluid in einem Düsenstrahl beaufschlagt werden. Der Antrieb kann pneumatisch, hydraulisch, elektrisch oder ähnlich erfolgen.

Werden die Fluidströme des zu reinigenden Fluids und des Reinigungs- bzw. Förderfluids anstatt von einer gemeinsamen von gesonderten Druck- bzw. Saugquellen, wie Gebläsen, erzeugt, so können sie in vorteilhafter Weise und ohne die Verwendung entsprechender Ventilsteuerungen unabhängig voneinander betrieben werden. Außerdem kann die Einrichtung zur Erzeugung und/oder Reinigung des Reinigungsfluids auch für andere Zwecke, z. B. für zusätzliche Saug- bzw. Säuberungsarbeiten, eingesetzt werden. Hierzu sind zweckmäßig Mittel vorgesehen, um an den Eingang dieser Einrichtung einen flexiblen Schlauch mit einer Saugdüse oder dgl. anzuschließen, mit welchem auch der Filterraum, das Arbeitsfilter und andere Bereiche der Filtervorrichtung manuell abgesaugt werden können. Zu diesem Zweck sind dieser Raum bzw. diese Bereiche durch eine zu öffnende Tür zugänglich.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Ausführungsbeispiele der Erfindung sind in den Zeichnungen dargestellt und werden im folgenden näher erläutert. Es zeigen:

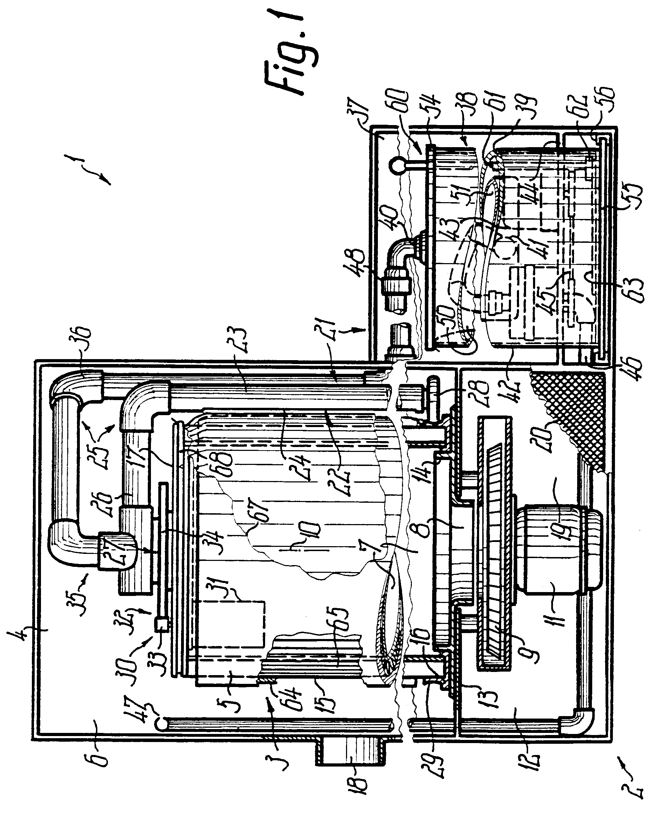

Fig. 1    eine erfindungsgemäße Filtervorrichtung in teilweise geöffneter Voreransicht und vereinfachter Darstellung,

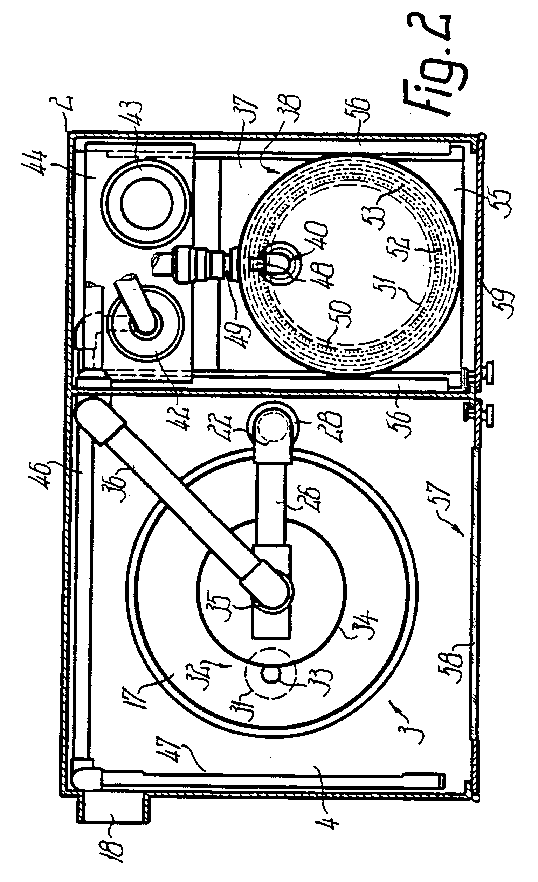

Fig. 2    die Filtervorrichtung gemäß Fig. 1 in geöffneter Draufsicht und

Fig. 3    einen Ausschnitt der Fig. 2 in vielfach vergrößerter und geschnittener Darstellung.

Die Filtervorrichtung 1 weist einen durch ein mehrräumiges Gehäuse gebildeten Sockel 2 auf und kann als mobile Vorrichtung auf Laufrollen, Kufen oder dgl. stehen. Zur Filterung eines zu reinigenden, von einer außerhalb der Filtervorrichtung befindlichen Arbeitsstelle abgesaugten Fluids ist statt eines flächigen bzw. ebenen ein mantelförmig im wesentlichen geschlossenes Arbeitsfilter 3 in einem im wesentlichen druckdicht verschließbaren Filterraum 4 vorgesehen. Der mehrlagige Filtermantel 5 des Arbeitsfilters 3 liegt mit seiner Eingangs- bzw. Außenumfangsfläche frei innerhalb des Filterraumes 4, der mit dieser Eingangsfläche den um das Arbeitsfilter 3 ringförmigen Rohluftraum 6 begrenzt, in welchen das zu reinigende Rohfluid angesaugt wird.

An der Ausgangs- bzw. Innenumfangsfläche begrenzt das Arbeitsfilter 3 einen gegenüber dem Rohluftraum 6 abgetrennten und innerhalb des Filterraumes 4 liegenden Reinluftraum 7, der im Bereich eines Endes des Filtermantels 5 an eine zentrale Saugöffnung 8 angeschlossen ist. Das Arbeitsfilter 3 ist zweckmäßig statt liegend stehend, nämlich vertikal, angeordnet, so daß die Saugöffnung 8 unterhalb bzw. am unteren Ende des Arbeitsfilters 3 liegen und an den Saugeingang eines unmittelbar darunter liegenden Gebläses 9 angeschlossen sein kann. Das Arbeitsfilter 3, die Saugöffnung 8, das Gebläse 9 und/oder ein unmittelbar unter diesem liegender Gebläsemotor 11 liegen zweckmäßig in einer gemeinsamen, annähernd vertikalen Achse 10, wobei das Gebläse 9 vorteilhaft axial ansaugt und einen radialen bzw. tangentialen Ausgang hat, während der Gebläsemotor 11 frei hängend an der Unterseite des Gebläsegehäuses befestigt ist. Das Gebläse 9 ist hängend an einem Gehäuseboden 13 befestigt.

Der Ausgang des Gebläses 9 liegt in einem dieses und den Motor 11 aufnehmenden Arbeitsgebläseraum 12, der von dem Filterraum 4 nur durch den von der Saugöffnung 8 durchsetzten Gehäuseboden 13 abgegrenzt ist und bei gleichem Grundriß geringere Höhe als der Filterraum 4 hat. An dem Gehäuseboden 13 ist ein die Saugöffnung 8 bildender Flanschring 14 befestigt, welcher das zugehörige Ende des Arbeitsfilters 3 zentriert und leicht auswechselbar dadurch aufnimmt, daß er nach Art eines Steckgliedes in dessen Innenumfang eingreift. Das im wesentlichen frei auf dem Gehäuseboden 13 stehende Arbeitsfilter 3 ist im wesentlichen durch eine vorgefertigte Filterpatrone 15 gebildet, die ein Feinstfilter mit großer Filterfläche von mehreren Quadratmetern, z. B. zwischen 5 und 10, insbesondere $7,5m^2$, bildet. Das untere Ende der Filterpatrone 15 greift über eine axiale Steckverbindung auswechselbar und zentriert in einen Endring 16 ein, der seinerseits über eine Steckverbindung zentriert und auswechselbar in den Flanschring 14 eingreift. Das andere, obere Ende der Filterpatrone 15 ist mit einem im wesentlichen scheibenförmigen Enddeckel 17 verschlossen, der über eine Steckverbindung zentriert und leicht lösbar in den Innenumfang der Filterpatrone 15 eingreift und etwa gleichen Außendurchmesser wie diese hat. Der Enddeckel 17 kann ohne direkte Verbindung zum Sokkel 2 nur vom Arbeitsfilter 3 getragen und ausgerichtet sein.

Im hinteren bzw. hinter dem Arbeitsfilter 3 liegenden Bereich ist oberhalb der Mitte der Höhe des Arbeitsfilters 3 an einer Seitenwand des Filterraumes 4 ein Arbeitsanschluß 18 mit einem verhältnismäßig großen Durchlaßquerschnitt von mehr als 1500m2 vorgesehen, der zum lösbaren Steckanschluß einer Leitungs- bzw. Schlauchverbindung für die abzusaugende Arbeitsstelle oder dgl. dient und etwa tangential zum Filtermantel 5 ausgerichtet ist. Die vom Gebläse 9 angesaugte Rohluft strömt durch diese Leitung und den Arbeitsanschluß 18 in den Rohluftraum 6, dann durch den Filtermantel 5 in den Reinluftraum 7 und durch die Filterausgangs- bzw. Saugöffnung 8 und den Ausgang des Gebläses 9 gegen eine Seitenwand gerichtet in den Arbeitsgebläseraum 12. Dieser ist mit einem annähernd über seine gesamte Vorderseite reichenden, luftdurchlässigen Gitterverschluß oder dgl. versehen, der den Ausgang der Reinluft ins Freie bildet und zweckmäßig an der Innenseite mit einem Endfilter 20, z. B. einem auswechselbaren Filtervlies, versehen ist. Der Querschnitt dieses Ausganges ist wesentlich größer als der der Saugöffnung 8, welcher wiederum größer als der des Arbeitsanschlusses 18 ist.

Zur Reinigung des Arbeitsfilters 3, insbesondere der Rohluftseite des Filtermantels 5, ist eine Reinigungseinrichtung 21 vorgesehen, die einen Förderkopf 22 aufweist, der statt im Reinluftraum 7 im Rohluftraum 6 liegt und im wesentlichen durch ein zylindrisches Rohr 23 gebildet ist, das dadurch mit seinem den Filtermantel 5 gegenüberliegenden Bereich eine im Querschnitt konvex gekrümmte Gleitkufe bildet. Im Mantel des Rohres 23 ist statt einer Vielzahl hinter- und/oder nebeneinander in einem Raster liegender Öffnungen eine einzige schlitzförmige Förderöffnung 24 vorgesehen, die wie das Rohr 23 anstatt mit einer Steigung im wesentlichen achsparallel zum Filtermantel 5 liegt und annähernd über dessen gesamte Axialerstrekkung reicht. Die Förderöffnung 24 hat zweckmäßig wenige Millimeter Breite, und ihre Längsbegrenzungen liegend unmittelbar benachbart zur zugehörigen Filterfläche, da sie etwa in einer Axialebene des Arbeitsfilters 3 vorgesehen ist.

Der Förderkopf 22 bildet einen an seinem Ende im wesentlichen druckdicht geschlossenen Endabschnitt eines Förderkanales 25 und ist an einem im Winkel zu ihm sowie an der Oberseite des Arbeitsfilters 3 liegenden Tragarm 26 im wesentlichen frei hängend angeordnet. Der radial zum Arbeitsfilter 3 liegende Tragarm 26, der selbst einen Abschnitt des Förderkanales 25 bildet bzw. als Rohr ausgebildet ist, ist über eine in der Achse 10 liegende Lagerung 27 an dem Arbeitsfilter 3 bzw. dem Enddeckel 17 gelagert. Am unteren, dem Tragarm 26 gegenüberliegenden Ende ist am Förderkopf 22 ein Läufer 28 in Form einer Laufrolle 28 gelagert, die an einer im Querschnitt einspringenden Laufbahn 29 am Außenumfang des Endringes 16 läuft und dadurch ein Ausrichtglied zur unmittelbaren genauen Ausrichtung des Förderkopfes 22 gegenüber dem Filtermantel 5 bildet.

Im Bereich der nur vom Arbeitsfilter getragenen Lagerung 27 bzw. am oberen Ende des Arbeitsfilters 3 ist für den Förderkopf 22 ein Antrieb 30 vorgesehen, der einen innerhalb des Reinluftraumes 7 bzw. des Filtermantels 5 liegenden, an der inneren Stirnseite des Enddeckels 17 befestigten Motor 31 und ein innerhalb des Rohluftraumes 6 an der Oberseite des Enddeckels 17 liegendes Getriebe 32 aus einem Motor-Ritzel 33 und einem in der Achse 10 liegenden, umfangsverzahnten Laufrad 34 aufweist, das mit der Lagerung 27 gegenüber dem Enddeckel 17 drehbar ist und an dem der Förderkopf 22 über den Tragarm 26 im wesentlichen starr befestigt ist. Das Laufrad 34 ist über eine axiale Steckverbindung leicht lösbar mit der Lagerung 27 verbunden, so daß es gemeinsam mit dem Förderkopf 22 und dem Tragarm 26 als Baugruppe leicht vollständig vom Arbeitsfilter 3 abgenommen und gewartet werden kann.

Der Förderkanal 25 weist einen feststehenden Kanalabschnitt bzw. Kanal 36 auf, der an der Innenseite des Filterraumes 4 befestigt und über ein in der Drehachse 10 des Förderkopfes 22 liegenden Kanallager 35 an den drehenden Kanalteil bzw. den Tragarm 26 angeschlossen ist. Hierfür ist z. B. ein T-förmiges Rohrteil vorgesehen, das zur Tragverbindung mit dem Laufrad 34 dient, an dessen eines T-Querstegende der Tragarm 26 angeschlossen ist und dessen vom Arbeitsfilter 3 wegweisender T-Fußsteg eine Lagerhülse bildet, in welche der feste Kanal 36 mit einem Endabschnitt abgedichtet und drehbar eingreift. Der als Elektromotor ausgebildete Motor 31 kann über eine innerhalb des Reinluftraumes 7 und in den Arbeitsgebläseraum 12 verlegte elektrische Leitung angeschlossen sein, die zweckmäßig über eine innerhalb des Reinluftraumes 7 liegende Steckerkupplung trennbar ist, so daß auch der Enddeckel 17 einschließlich des Motors 31 leicht vom Filtermantel 5 entfernt bzw. mit diesem, dem Endring 16 und/oder dem Förderkopf 22 als Baueinheit aus dem Filterraum 4 herausgenommen werden kann. Die beiden ineinandergreifenden Lagerteile des Kanallagers 35 sind ebenfalls nach Art einer Steckverbindung voneinander trennbar, so daß der feststehende Kanalteil 36 beim Herausnehmen einer dieser Baueinheiten im Filterraum 4 bzw. am Sockel 2 verbleiben kann.

Neben dem Filterraum 4 und dem Arbeitsgebläseraum 12 ist ein weiterer und kleinerer Nebenraum 37 der Reinigungseinrichtung 21 vorgesehen, dessen Oberseite tiefer als die des Filterraumes 4 liegen kann und der gegenüber diesem im wesentlichen dicht abgetrennt ist. Der Nebenraum 37 nimmt ein Reinigungsfilter 38 zur Reinigung des Reinigungsfluids auswechselbar auf. Dieses Reinigungsfilter 38 weist zweckmäßig als formstabiles Gehäuse einen tonnenförmigen Filterbehälter 39 auf, der zweckmäßig einschließlich aller auswechselbar in ihm liegenden Filtereinsätze als Ganzes leicht aus dem Nebenraum 37 herausnehmbar ist. Das Reinigungsfilter 38 weist an der Oberseite des Filterbehälters 39 einen Eingang 40 auf, an welchen das zugehörige Ende des Förderkanales 25 bzw. des Kanales 36 angeschlossen ist, der in einer hinteren Ecke des Förderraumes 4 verlegt und durch eine dem Arbeitsanschluß 18 gegenüberliegende Trennwand zwischen dem Filterraum 4 und dem Nebenraum 37 in diesen geführt ist.

Der Ausgang 41 des Reinigungsfilters 38 liegt am Außenumfang des Filterbehälters 39 und ist über eine Saugleitung an ein Reinigungs-Gebläse 42 angeschlossen, das wie ein neben ihm angeordneter Motor 43 stehend bzw. mit vertikaler Achse auf einer Konsole 44 befestigt ist, die schwingungsgedämpft im Nebenraum 37 am Sockel 2 befestigt sein kann und verdeckt hinter dem Reinigungsfilter 38 liegt. Der Motor 33 treibt das Gebläse 42 über ein unterhalb der Konsole 44 liegendes Getriebe 45, z. B. ein Riemengetriebe, an. Der an den Ausgang 41 angeschlossene Saugeingang des Gebläses 42 liegt an dessen Oberseite, und sein Gebläseausgang liegt an seiner Unterseite, so daß er über einen unterhalb der Konsole 44 liegenden und die genannte Trennwand durchsetzenden Rückströmkanal 46 an mindestens einen der weiteren Räume, insbesondere an den Rohluftraum 2, angeschlossen werden kann. Der Rückströmkanal 46 ist durch den Arbeitsgebläseraum 12 und den Gehäuseboden 13 in den Filterraum 4 geführt und bildet etwa in Höhe des Antriebes 30 bzw. des Getriebes 32 im Mantel eines rohrförmigen Düsenkopfes eine schlitzförmige Blasdüse 47, die gegen den Eingriffsbereich zwischen dem Ritzel 33 und dem Laufrad 34 gerichtet ist, so daß das Getriebe 32, die Lagerung 27, das Kanallager 35 und/oder weitere bewegliche Teile von anhaftenden Stoffen befreit werden können.

Die Leitungsverbindungen zwischen dem Eingang 40 und dem Kanal 36 einerseits sowie zwischen dem Ausgang 41 und dem Gebläseeingang andererseits erfolgen zweckmäßig über flexible Schlauchleitungen, von denen die dem Eingang 40 zugeordnete an eine an der Trennwand befestigte Anschlußmuffe angeschlossen sein kann, welche das zugehörige Ende des festen Kanales 36 bildet. Dadurch kann das Reinigungsfilter 38 ohne Trennung seiner Anschlüsse aus dem Nebenraum 37 herausgenommen werden. Zweckmäßig ist jedoch der Eingangs- bzw. Ausgangsanschluß des Reinigungsfilters 38 jeweils durch eine trennbare Anschlußkupplung 48 bzw. 49 gebildet, so daß sich das Reinigungsfilter 38 vollständig von seinen Verbindungen mit der übrigen Filtervorrichtung 1 trennen und ggf. als gesondertes Filtergerät unabhängig von der übrigen Filtervorrichtung 1 einsetzen läßt.

Das Reinigungsfilter 38 ist vorteilhaft entsprechend dem DE-GM 82 13 535.5 ausgebildet, auf welches wegen weiterer Einzelheiten und Wirkungen Bezug genommen wird. Innerhalb des Filterbehälters 39 weist das Reinigungsfilter 38 einen Filtersack 50 aus Filterpapier oder dgl. auf, welcher einen oben zum Behälterraum offenen Abscheidebehälter 51 umgibt, in dessen obere Öffnung der Eingang 40 nach unten gerichtet mündet. Der Filtersack 50 kann von einem ebenfalls sackförmigen Staubfilter 52 aus Textil oder dgl. und/oder von einem stützenden Drahtkorb 53 umgeben sein, welcher am Außenumfang des Filters 52 liegt. Jeder der genannten Teile ist nach Abnehmen eines oberen, den Eingang 40 tragenden Deckels 54 des Filterbehälters 39 aus diesem zum Auswechseln, Reinigen und/oder Entleeren herausnehmbar. Das durch den Eingang 40 in den Filterbehälter 39 strömende Reinigungsfluid scheidet Teile der mitgeförderten festen, flüssigen bzw. klebrigen Stoffe zunächst in dem am Boden geschlossenen Abscheidebehälter 51 ab, strömt dann über dessen obere Behälteröffnung in den Filtersack 50, durchdringt dessen Wandung von innen nach außen unter Abfiltrierung weiterer Stoffe, durchströmt entsprechend zunächst den Filter 52 und dann den Drahtkorb 53 und tritt schließlich als Reinfluid durch den Ausgang 41, das Gebläse 42 und den Rückströmkanal 46 aus der Blasdüse 47 aus. Die im Filtersack 50 gesammelten Stoffe können staubfrei entsorgt werden, da die Sacköffnung des Filtersackes 50 vor dessen Herausnahme aus dem Filterbehälter 30 durch Raffen geschlossen werden kann.

Das Reinigungsfilter 38 ist zweckmäßig abnehmbar auf einen Schubboden 55 gestellt, der durch eine Öffnung an der Vorderseite aus dem Nebenraum 37 herausgezogen werden kann. Der Schubboden 55 ist an Schienen 56 so geführt, daß das Reinigungsfilter 38 hierbei vollständig außerhalb des Nebenraumes 37 liegt und in diesem Zustand entweder gewartet oder aber von dem Schubboden 55 abgenommen werden kann. Der Filterraum 4 ist über eine an seiner Vorderseite liegende und mindestens annähernd über die gesamte Höhe und/oder Breite des Arbeitsfilters 3 bzw. der Lagerungen und des Antriebes reichende Gehäuseöffnung zugänglich, die mit einer Türe 57 im wesentlichen dicht verschlossen werden kann. Außerdem sind das Arbeitsfilter und/oder der Antrieb bzw. die Lagerungen bei geschlossenem Filterraum 4 von außen zur Kontrolle jederzeit durch ein Fenster 58 einsehbar, das zweckmäßig in der Türe 57 vorgesehen ist. Mit einer entsprechenden, etwa in der Ebene der Türe 57 liegenden und unabhängig von dieser zu öffnenden bzw. schließenden Türe 59 ist die vordere Öffnung des Nebenraumes 37 verschließbar.

Zur manuellen Reinigung des Filtermantels des Filtersackes 50 ohne Öffnung des Filterbehälters 39 ist zweckmäßig eine Rüttelvorrichtung 60 vorgesehen, die z. B. einen verschiebbar durch den Deckel 54 hindurchgeführten Stab 61 zum Freiklopfen des Filtersackes 50 derart aufweist, daß am Filtersack haftende Stoffe sich lösen und auf den Boden des Filtersackes 50 fallen. Der Stab 61, der zweckmäßig am oberen Ende einen außerhalb des Filterbehälters 39 liegenden Griff aufweist, kann zwischen dem Abscheidebehälter 51 und dem Filtersack 50 liegenden und am unteren Ende ein Verbindungsglied, z. B. einen Magneten 62, zur leicht lösbaren und selbsttätig wieder einrückenden Verbindung mit einem Rüttelboden 63 aus Blech oder dgl. aufweisen, der auf dem Boden des Filters 52, des Drahtkorbes 53 oder des Filterbehälters 39 liegt. Insofern erfolgt die Verbindung zwischen dem Stab 61 und dem Rüttelboden 63 unter Zwischenlage mindestens des Bodens des Filtersackes 50. Die Rüttelvorrichtung 60 bildet eine Baueinheit mit dem Filterbehälter 39 bzw. dem Deckel 54, mit welchem der obere Sackrand des Filtersackes gegenüber dem Behältermantel festgeklemmt ist.

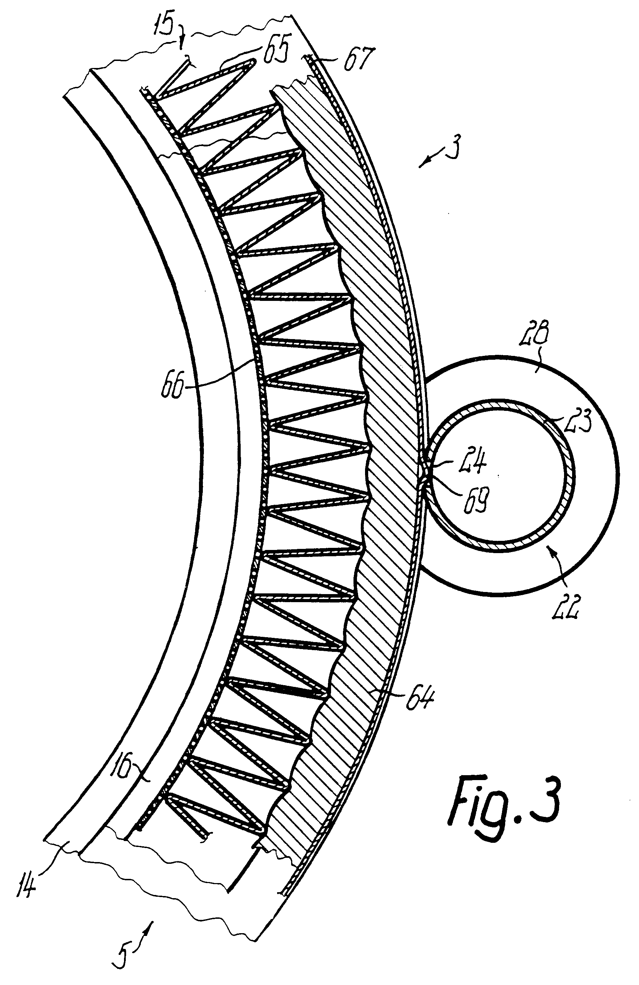

Das Arbeitsfilter 3 weist gemäß Fig. 3 auf der Eingangsseite bzw. am Außenumfang eine druckelastische Auflage 64 aus einem weichen, offenporigen Schaumstoff auf, die auch als Filter eingesetzt und z. B. durch Aktivkohleschaumstoff gebildet sein kann. Diese Auflage 64 ist auf dem Außenumfang eines zwischen zwei Hüllflächen zick-zackförmig verlaufenden, mantelförmigen Feinstfilters 65 der Filterpatrone 15 vorgespannt angeordnet, wobei das Feinstfilter 65 aus Papier bestehen kann und mit seinem Innenumfang an einem perforierten Stützkorb 66 anliegt, der eine Baueinheit mit der Filterpatrone 15 bildet und in dessen Innenumfang der Endring 16 zentriert eingreift. Auf dem Außenumfang der Auflage 64 ist ein weiterer Vorfilter in Form eines textilen Filtertuches 67 so mit radialer Spannung angeordnet, daß dadurch die Auflage 64 vorgespannt wird.

Das Filtertuch 67 kann z. B. ein eben auslegbares Tuchstück mit Verschlußteilen an zwei voneinander abgekehrten Tuchkanten sein, so daß diese Tuchkanten ggf. ohne Überlappung miteinander verbunden werden können und das Filtertuch 67 dann einen im wesentlichen über die gesamte Länge des Arbeitsfilters 3 sich erstreckenden Filterschlauch bildet. Um diesen entlang der entsprechenden axialen Mantellinie öffnen zu können, kann ein Reißverschluß, ein Klettverschluß oder dgl. mit voneinander vollständig trennbaren Verschlußleisten vorgesehen werden. Damit das Filtertuch 67 die Auflage 64 auch an mindestens einer Stirnfläche abdecken kann, ist für das obere und/oder untere Ende des Filterschlauches ein ringförmiges, zugelastisches Halteband 68 vorgesehen, das z. B. benachbart zum zugehörigen Ende der schlauchförmigen Auflage 64 unter Zwischenlage des Filtertuches 67 in eine Ringnut am Außenumfang des Enddeckels 17 bzw. in eine entsprechende Ringnut am Außenumfang des Endringes 16 benachbart zur Laufbahn 29 eingreift. Das Filtertuch 67 bildet die im Rohluftraum 6 freiliegende Eingangsseite des Arbeitsfilters 3 und wie die Auflage 64 ein Vorfilter, welches zur REinigung durch die Reinigungseinrichtung 21 bestimmt ist, so daß das Feinstfilter 65 nur sehr geringfügig durch Verunreinigungen belastet wird und daher wie das übrige Arbeitsfilter 3 eine sehr hohe Standzeit hat.

Zum Betrieb der Filtervorrichtung 1 wird das GEbläse 9 eingeschaltet und entsprechend schmutzbelastete Luft durch den Arbeitsanschluß 18 angesaugt, am Arbeitsfilter 3 gereinigt und dann aus dem Reinluftraum 7 über das Endfilter 20 wieder nach außen geblasen. Gleichzeitig und/oder in Betriebspausen des Arbeitsfilters 3 kann die Reinigungseinrichtung 21 dadurch eingeschaltet werden, daß der Antrieb 30 und das Gebläse 42 in Betrieb genommen werden. Hierdurch wird die Förderöffnung 24, deren am Außenumfang des Rohres 23 liegende Begrenzungen nach Art scharfer Schabkanten über ihre Länge durchgehend an der zugehörigen Fläche des Filtertuches 67 anliegend und mit ihren äußeren Flanken gleichzeitig gekrümmte Gleitkufen bilden, mit einer Vorschubgeschwidigkeit zwischen etwa 15 und 35, vorzugsweise 25mm/s, in Umfangsrichtung entlang des Filtertuches 67 bewegt, wobei die Förderöffnung 24 gegenüber der Drehachse 10 konstanten Abstand hält. Durch den Unterdruck im Förderkopf 22 wird das Filtertuch 67 in einem kleinen Wellenbogen 69 in die Förderöffnung 24 hinein und gegen die Schabkanten angezogen, wobei es hier von der Auflage 64 geringfügig abgehoben werden kann. Hierbei wird das vorgespannte Filtertuch um die jeweilige Schabkante geringfügig herumgezogen und außerdem ausgebeult, so daß haftende Schmutzpartikel nicht nur abgeschabt, sondern durch Krümmung auch zum Abplatzen gebracht werden, wobei gleichzeitig auch Partikel durch das Filtertuch 67 hindurch aus der Auflage 67 herausgesaugt werden können. Die in den Förderkopf 22 eingesaugte belastete Luft gelangt über den Tragarm 26 und den Kanal 36 in das Reinigungsfilter 38, wird dort in der beschriebenen Weise gereinigt und dann als Reinluft während des beschriebenen Reinigungsvorganges zum Arbeitsfilter 3 zurückgeführt.

Die Filterpatrone 15 wird dadurch praktisch nicht mehr mit größeren Staubmengen belastet und braucht nur in sehr großen Abständen gereinigt zu werden, was nach Abnehmen des Filtertuches 67 bzw. der Auflage 64 in der beschriebenen Weise durch bürstendes Absaugen mit dem Gebläsesauger der Reinigungsvorrichtung 21 erfolgen kann. Bei schwierigen, beispielsweise klebrigen Stäuben kann die Reinigungsvorrichtung 21 auch während des Filtriervorganges ständig mitlaufen, so daß praktisch kein Ansetzen der Stäube am Arbeitsfilter 3 vorkommen kann.

Das leicht auswechselbare Filtertuch 67 kann an die jeweiligen Erfordernisse angepaßt werden und z. B. teflonbeschichtet sein, falls das Ansetzen klebriger Stäube verhindert werden soll. Das Arbeitsfilter 3 ist durch die erfindungsgemäße Ausbildung über sehr lange Zeit ununterbrochen einsetzbar, da es nicht, wie z. B. ein Elektrofilter, periodisch gereinigt und hierfür außer Betrieb genommen werden muß. Dabei ist die Standzeit des Arbeitsfilters 3 nahezu unbegrenzt. Da jedes Gebläse bzw. jeder Motor im Reinluftraum liegt, sind auch diese Aggregate sehr gut gegen Verschleiß geschützt.

**Patentansprüche**

1.  Filtervorrichtung zum Herausfiltern mindestens eines Stoffes aus wenigstens einem Fluid, insbesondere zur Abscheidung von Feststoff-Partikeln aus Luft an Absaugeinrichtungen, mit mindestens einem in einem Filtrierzustand von einem Arbeitsstrom in einer Arbeits-Strömungsrichtung angeströmten Arbeitsfilter (3) mit Oberflächen, dadurch gekennzeichnet, daß wenigstens ein Arbeitsfilter (3) im Bereich wenigstens einer Filterfläche eine Rückhaltezone für den Stoff bildet und daß insbesondere Mittel zum wenigstens teilweise Entfernen des Stoffes aus der Rückhaltezone vorgesehen sind.

2.  Filtervorrichtung nach Anspruch 1, dadurch gekennzeichnet, daß die Mittel zur Entfernung des Stoffes für mindestens einen Reinigungsstrom zur Entfernung des Stoffes einen Förderkanal (25) mit wenigstens einem Förderkopf (22) und mindestens einer Förderöffnung (24) aufweisen, daß der Förderkopf (22) insbesondere relativ zum Arbeitsfilter (3) in einer Arbeitsbewegung entlang einer der Oberflächen des Arbeitsfilters (3) bewegbar ist, daß vorzugsweise die Mittel zur Entfernung des Stoffes im wesentlichen während des Filtrierzustandes ausgebildet sind, daß insbesondere der größte Teil des Arbeitsfilters (3) zur Durchströmung durch den Arbeitsstrom und ein restlicher Teil des Arbeitsfilters zur Durchströmung durch den Reinigungsstrom freigegeben ist, daß vorzugsweise der Arbeitsstrom und der Reinigungsstrom im wesentlichen entgegengesetzt durch das Arbeitsfilter (3) geführt sind und daß insbesondere die Fördermenge des Reinigungsstromes mehrfach kleiner als die des Arbeitsstromes und/oder der Förderdruck des Reinigungsstromes vielfach höher als der des Arbeitsstromes ist.

3.  Filtervorrichtung nach Anspruch 1 oder 2, dadurch gekennzeichnet, daß eine Filtrierung des Reinigungsstromes in Strömungsrichtung nach dem Arbeitsfilter (3) und/oder eine Rückführung des Reinigungsstromes vorgesehen ist, daß insbesondere die Rückführung des Reinigungsstromes nach Filtrierung zum Arbeitsfilter (3) vorgesehen ist, daß vorzugsweise der zurückgeführte Reinigungsstrom als Blasstrom zur Beaufschlagung von Vorrichtungsteilen gerichtet ist, daß insbesondere die mindestens einer Förderöffnung (24) zugehörige Oberfläche des Arbeitsfilters (3) aufrecht, insbesondere vertikal, angeordnet ist, daß vorzugsweise wenigstens ein Förderkopf (22) im wesentlichen hängend gelagert und/oder stabförmig ausgebildet ist, daß insbesondere die mindestens einer Förderöffnung (24) zugehörige Oberfläche des Arbeitsfilters (3) eine Mantelfläche bzw. im wesentlichen eine Zylinderfläche bildet und/oder daß die Arbeitsbewegung eine Bogenbewegung ist, wobei vorzugsweise ein einziger Förderkopf (22) in einer im wesentlichen kontinuierlichen Drehbewegung entlang des vom Arbeitsstrom durchströmbaren Arbeitsfilters (3) läuft.

4. Filtervorrichtung nach einem der vorhergehenden Ansprüche, dadurch gekennzeichnet, daß der Reinigungsstrom im Bereich der Förderöffnung (24) ein Saugstrom ist, daß vorzugsweise die Begrenzung wenigstens einer Förderöffnung (24) mindestens teilweise mindestens ein Arbeitsfilter (3) berührt und/oder wenigstens teilweise unmittelbar benachbart zum Arbeitsfilter (3) liegt, daß insbesondere wenigstens eine Förderöffnung (24) der Filterfläche gegenüberliegt, daß wenigstens eine Förderöffnung (24) einen gegenüber der Größe der Filterfläche um mindestens eine Potenz kleineren Öffnungsquerschnitt hat, daß sich vorzugsweise mindestens eine Förderöffnung (24) entlang einer Linie annähernd über die gesamte zugehörige Erstreckung mindestens eines Arbeitsfilters (3) erstreckt und daß insbesondere mindestens eine Förderöffnung (24) schlitzförmig und wenigstens ein Förderkopf (22) quer zur Linie gegenüber dem Arbeitsfilter (3) bewegbar ist.

5. Filtervorrichtung nach einem der vorhergehenden Ansprüche, dadurch gekennzeichnet, daß der mindestens einer Förderöffnung (24) gegenüberliegende Bereich wenigstens eines Arbeitsfilters (3) durch den Reinigungsstrom in sich flexibel verformbar ist, daß der gegenüberliegende Bereich insbesondere an die Förderöffnung (24) ansaugbar ist, daß vorzugsweise dieser Bereich durch wenigstens eine flächige Filterlage, wie ein Filtertuch (67), gebildet ist, daß insbesondere wenigstens ein Arbeitsfilter (3) mindestens zweilagig ist, daß vorzugsweise in Arbeitsströmrichtung auf den mindestens einer Förderöffnung (24) gegenüberliegenden Bereich (67) wenigstens eine druckelastische Filterlage (64) und/oder mindestens ein Feinfilter (65) folgt, daß insbesondere das Feinfilter (65) durch eine mantelförmige, leicht auswechselbare Filterpatrone (15) gebildet ist, daß vorzugsweise der Arbeitsstrom von außen nach innen durch einen Filtermantel (5) wenigstens eines Arbeitsfilters (3) gerichtet ist und/oder mindestens ein Förderkopf (22) an dessen Außenumfang liegt, daß insbesondere an ein Ende des Innenraumes (7) des Arbeitsfilters (3) ein Sauggebläse (9) unmittelbar angeschlossen und/oder im Bereich des anderen, geschlossenen Endes des Arbeitsfilters (3) eine Lagerung (27) für den Förderkopf (22) vorgesehen ist und daß vorzugsweise mindestens ein Förderkopf (22) in einem Saugraum (4) liegt.

6. Filtervorrichtung nach einem der vorhergehenden Ansprüche, dadurch gekennzeichnet, daß für die Arbeitsbewegung ein motorischer Antrieb (30) vorgesehen ist, der insbesondere einen innerhalb mindestens eines Arbeitsfilters (3) liegenden Motor (31) aufweist und daß vorzugsweise wenigstens ein Arbeitsfilter (3) gegenüber einem Vorrichtungs-Sockel (2) im wesentlichen feststehend sowie der Förderkopf (22) entlang der Oberfläche des Arbeitsfilters (3) gegenüber dem Sockel (2) bewegbar angeordnet ist.

7. Filtervorrichtung nach einem der vorhergehenden Ansprüche, dadurch gekennzeichnet, daß mindestens ein Förderkopf (22) mit mindestens einem Läufer (28) geführt ist, daß insbesondere mindestens ein Förderkopf (22) mit einer im Bereich eines freien Endes vorgesehenen Laufrolle geführt ist, daß vorzugsweise wenigstens ein Förderkopf (22) unmittelbar am Arbeitsfilter (3) geführt ist und daß vorzugsweise mindestens ein Arbeitsfilter (3) freistehend angeordnet ist, daß insbesondere mindestens ein Arbeitsfilter (3) auf einem Gehäuseboden (13) angeordnet ist, der den wenigstens ein Arbeitsfilter (3) aufnehmenden und einen Anschluß (18) für eine nach außen wegführende Saugleitung aufweisenden Rohluft- bzw. Saugraum (6) von einem darunter liegenden Arbeitsgebläseraum (12) trennt.

8. Filtervorrichtung nach einem der vorhergehenden Ansprüche, dadurch gekennzeichnet, daß für den Arbeitsstrom und den Reinigungsstrom gesonderte Förderquellen, insbesondere Gebläse (9, 42), vorgesehen sind und/oder daß ein Reinigungs-Gebläse (42) für den Reinigungsstrom einen Anschluß (48) zur wahlweisen lösbaren Verbindung mit wenigstens einem Förderkanal (25) und einem flexiblen Reinigungsschlauch aufweist.

9. Filtervorrichtung nach einem der vorhergehenden Ansprüche, dadurch gekennzeichnet, daß mindestens ein Reinigungs-Gebläse (42) und/oder ein Reinigungsfilter (38) für den Reinigungsstrom außerhalb des wenigstens ein Arbeitsfilter (3) aufnehmenden Filterraumes (4) und/oder des Arbeitsgebläseraumes (12) angeordnet ist, daß insbesondere das Gebläse (42) bzw. das Reinigungsfilter (38) in einem neben dem Arbeitsgebläseraum (12) bzw. dem Filterraum (4) liegenden Nebenraum (37) angeordnet sind und daß vorzugsweise mindestens zwei Räume durch ein gemeinsames Gehäuse gebildet und/oder gesondert zugänglich sind.

10. Filtervorrichtung nach einem der vorhergehenden Ansprüche, dadurch gekennzeichnet, daß zur Filterung des Reinigungsstromes ein von innen nach außen durchströmter Filtersack (50) vorgesehen ist, daß insbesondere der Filtersack (50) in einen gegenüber der übrigen Filtervorrichtung (1) mobilen Filterbehälter (39) auswechselbar eingesetzt ist und daß vorzugsweise im Nebenraum (37) hinter dem Filterbehälter (39) ein Motorgebläse angeordnet und/oder der Ein- und der Ausgang (40, 41) des Filterbehälters (39) jeweils durch eine lösbare Anschlußkupplung (48, 49) gebildet ist.

11. Filtervorrichtung nach einem der vorhergehenden Ansprüche, dadurch gekennzeichnet, daß ein Getriebe (32) für die Arbeitsbewegung in dem Filterraum (4) liegt, daß insbesondere ein Getriebe (32) an der Oberseite des Arbeitsfilters (3) liegt und daß vorzugsweise der zurückgeführte Reinigungsstrom zur Säuberung mit einer Düse (47) gegen das Getriebe (32) gerichtet ist.

Fig.1

Fig. 2

Fig.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-2 230 134 (FA. H.KRANTZ)<br>* das ganze Dokument *<br>--- | 1 | B01D46/24<br>B01D46/26 |
| X | US-A-2 559 428 (H.J.HERSEY ET AL.)<br>* das ganze Dokument *<br>--- | 1,2 | |
| X | US-A-2 796 146 (H.J.HERSEY ET AL.)<br>* das ganze Dokument *<br>--- | 1 | |
| X | US-A-2 678 109 (W.O.VEDDER,)<br>* das ganze Dokument *<br>----- | 1 | |

**RECHERCHIERTE SACHGEBIETE (Int. Cl.5)**

B01D

Der vorliegende Recherchenbericht wurde für alle Patentansprüche erstellt

| Recherchenort | Abschlußdatum der Recherche | Prüfer |
|---|---|---|
| DEN HAAG | 10 JULI 1992 | PYFFEROEN K. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
..............................................................................................
& : Mitglied der gleichen Patentfamilie, übereinstimmendes
    Dokument

EPO FORM 1503 03.82 (P0403)